Europäisches Patentamt

**European Patent Office**

**Office européen des brevets**

(11) Publication number: **0 271 615**
**A1**

## (12) EUROPEAN PATENT APPLICATION

(21) Application number: **86309634.3**

(22) Date of filing: **10.12.86**

(51) Int. Cl.4: **G01J 3/06** , **G01J 3/28**

(43) Date of publication of application:
**22.06.88 Bulletin 88/25**

(84) Designated Contracting States:
**CH DE FR IT LI NL SE**

(71) Applicant: **MONOLIGHT INSTRUMENTS LIMITED**
**2-3 Waterside Hamm Moor Lane**
**Weybridge Surrey KT15 2SN(GB)**

(72) Inventor: **Fraval, Robert Hanafi**
**Tite Hill Englefield Green**
**Engham Surrey(GB)**
Inventor: **Angus, Robert**
**283 Beaulieu Gardens Blackwater**
**Camberley Surrey(GB)**
Inventor: **Martinen, Hinrich**
**Lindenstrasse 6**
**D-2085 Quickborn(DE)**

(74) Representative: **Nash, Keith Wilfrid**
**KEITH W. NASH & Co. Pearl Assurance**
**House 90-92 Regent Street**
**Cambridge CB2 1DP(GB)**

(54) **Optical device.**

(57) An optical spectrum multiplexer enabling rapid continuous spectral monitoring in a multipoint manufacturing process, said multiplexer comprising a plurality of light inlet slits (20) and light outlet slits (22) angularly spaced around a circular path, a diffraction grating (12) at the centre of the path, and a drum (14) having windows (16, 18) concentrically disposed between the said circular path and the grating, said grating and drum in use being rotated so that at any given instant light incident on the grating through one inlet slit is reflected to only one outlet slit.

_Fig 1_

## Optical Device.

### Field of invention.

This invention concerns an optical device which operates on the principle of a standard monochromator but which allows an optical input to be sequentially applied to two or more outputs.

### Background to the invention.

In a standard monochromator, light from an input slit is reflected and diffracted using a diffraction grating onto an output slit.

If the diffraction grating is essentially the only component between the two slits the grating must have the properties of a concave reflector.

Where a standard grating is used, focusing mirrors are required so as to collimate a diverging beam from the input slit onto the grating and reflect the diffracted collimated beam from the grating to focus it back onto the output slit.

It will be seen that the use of a concave grating reduces the number of optical components required and is therefore the preferred arrangement.

It is an object of the present invention to provide an optical spectrum multiplexer operating in accordance with the principles of a monochromator.

### Summary of the invention.

According to the present invention an optical spectrum multiplexer comprises two or more input slits and a corresponding number of output slits disposed around a circular path, a concave grating mounted for rotation about an axis passing through the centre of the circular path, and means for restricting the light at any instant which is incident on any portion of the grating to that of one of the input slits and one of the output slits.

Preferably the grating is rotated continuously at a speed in the range 8 to 15 revolutions per second.

The effect of rotating the diffraction grating is to take white light from the narrow input slit and after diffraction to present to the output slit the same spectrum of light but this time spread out with the short wavelengths at one end of the beam and the longer wavelengths at the other. As the grating rotates this spectrum spread light beam scans across the slit so causing a sequential increase in wavelength (or decrease in wavelength) spectrum to emerge from the output slit.

Preferably detectors are associated with each of the slits to collect the light received by each output slit and the detectors may either transfer the optical information to an optical sensor or may convert the optical information into electrical signals.

Electrical output signals may be displayed on an oscilloscope or processed in a computer or other instrument.

The invention allows several channels of optical input information to be processed during the course of one revolution.

In order to increase the number of channels which can be used simultaneously, the multiplexer may have more than one grating so that light from several inputs may be reflected to respective outputs by each grating, or the grating may have more than one portion each receiving light from and reflecting light to respective inputs and outputs.

Thus the multiplexer of the present invention may comprise a plurality of circular paths of input slits and output slits and a plurality of grating portions axially positioned to be associated with respective circular paths.

Alternatively, the multiplexer may comprise a plurality of grating portions associated with a common circular path of input and output slits.

Some or all of the grating portions may be provided by a common grating or each grating portion may be provided by a separate grating.

The various alternatives may be combined, to provide, for instance, two axially spaced circular paths of input and output slits with three back-to-back gratings each extending axially sufficiently far to have two grating portions each, one for each circular path.

In order to make sure that only one input is associated with each output during the multiplexing process, a cylindrical baffle is conveniently employed having two windows associated with the or each grating portion which are circularly spaced apart so as to correspond to the reflected angle of the grating, the two windows aligning with pairs of input and output slits as the drum rotates with the grating. The drum is conveniently hollow and has a darkened interior to minimise reflections.

The use of such a drum means that whilst a grating portion is accepting light from one channel, none of the other channels are able to illuminate the grating portion because the cylinder shields the grating from such illumination.

If there are several axially spaced circular paths, each may have a separate drum or a single drum may extend axially to be associated with each path.

The output from each of the slits may be collected into a single detector if each of the slit outputs are fed to such a detector via for example optical fibres. Alternatively several detectors may be located one at each slit and the outputs from the detectors may be combined into a single output signal by electrical means.

The output from the detector supplied from the optical fibres or the combined output from a plurality of detectors may be amplified and fed to a computer or other instrumentation for processing.

The invention may be used to take multiple measurements of various points in a manufacturing process where the optical transmission or reflection is required to be measured as a full spectrum and where this monitoring takes place in different parts of the process. Because the grating is continuously rotating it is possible to achieve a full spectrum output from for example 8 channels up to 10 times a second without un-necessarily high speeds if a single grating is used with a single circular path of inlets and outlets. More channels and/or faster sampling is possible if several gratings and several circular paths are provided. This allows very rapid continuous spectral monitoring in a multipoint process.

The invention will now be described by way of example with reference to the accompanying drawings, in which:

Figure 1 illustrates diagrammatically a first embodiment of the invention;

Figure 2 illustrates diagrammatically a second embodiment of the invention;

Figure 3 illustrates diagrammatically a third embodiment of the invention;

Figure 4 is a diagrammatic side view of the embodiment of Figure 2; and

Figure 5 is a diagrammatic side view of the embodiment of Figure 3.

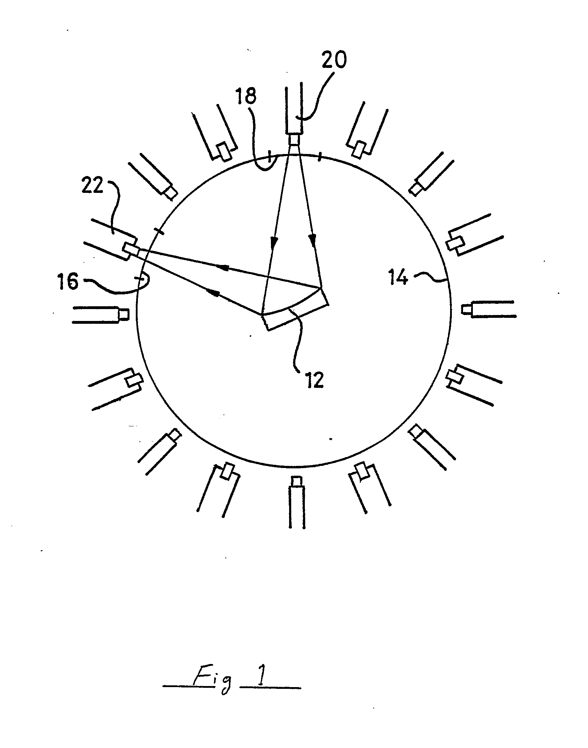

In Figure 1 a concave grating 10 is mounted for rotation about a central axis 12 within a hollow cylindrical drum 14 having two small windows 16 and 18 in the wall thereof angularly spaced apart so that a beam of light emanating from a first device 20 can pass through the window 18 and be reflected from the grating 10 through the window 16 onto a detector 22. The devices 20 and 22 form a pair and further pairs of such devices are located around the cylindrical drum 14. The provision of the drum means that light from a device such as 20 can only affect one detector and complete separation is achieved between the various light outputs and inputs except for the pairs of input and output devices.

The input device 20 may be a glassfibre and the output detector may itself be a fibre leading to another detector or to an optical device or may itself be an optoelectronic transducer for generating an electrical signal.

Although not shown the drum 14 rotates in synchronism with the grating 12 and is conveniently attached to the mounting for the grating so that the two are automatically rotated as one.

The defined aperture detectors and the defined aperture emitters (20) could be larger detectors or emitters screened by a fixed or adjustable slit so that the bandwidth of the optical signal, or the resolutions with which the wavelength can be observed can be narrowed or broadened as desired.

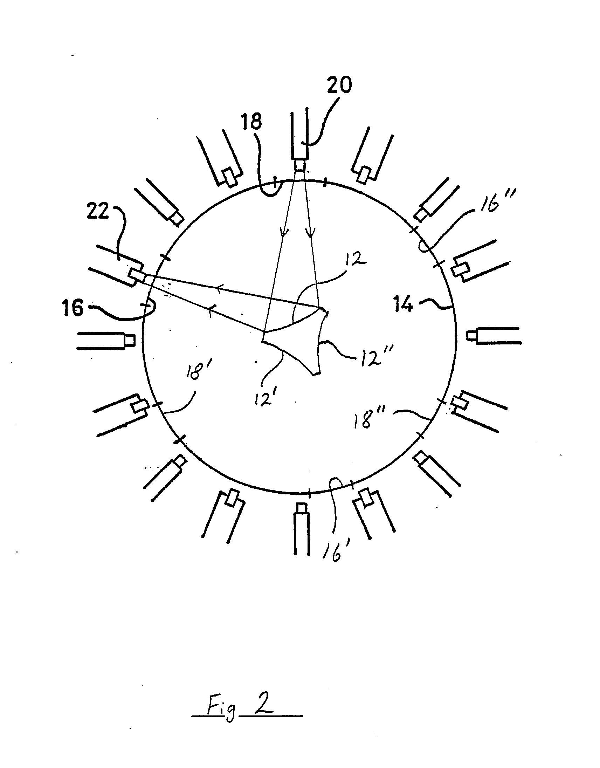

Figures 2 to 5 show embodiments with more than one grating portion and more than one circular path of inputs and outputs.

In Figure 2, three gratings 12, 12′, 12″ are provided on a common grating block. There are two axially spaced rows of inputs 20 and outputs 22. Each grating 12, 12′, 12″ extends axially sufficiently far to have two axially distinct grating portions, one associated with each row of inputs and outputs.

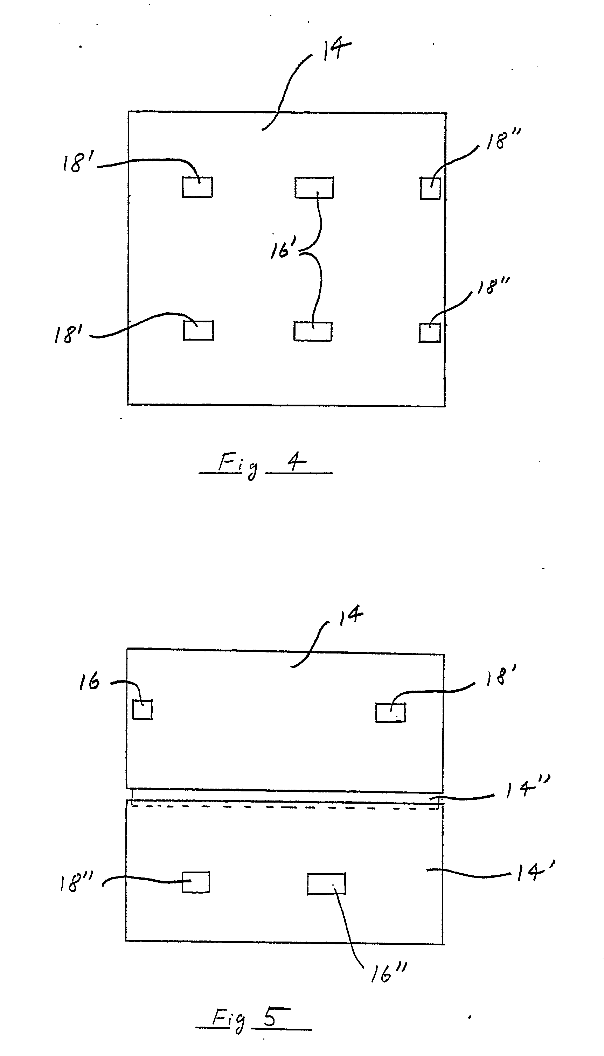

For each row, the drum 14 has an inlet window 18, 18′, 18″ and an outlet window 16, 16′, 16″ associated with each respective grating 12, 12′, 12″. Thus there are two rows each of six windows in the drum 14. Figure 4 is a side view of this embodiment, in which the two rows of inputs 20 and outputs 22 are not shown, so that the windows in the drum 14 are more clearly visible.

As can be seen in Figure 2, the windows associated with different gratings 12, 12′, 12″ are aligned with the inputs 20 and outputs 22 at different rotational positions of the drum 14, so that in the position shown only one grating 12 is reflecting light. After a slight anti-clockwise rotation of the drum 14 and the gratings, a second grating 12′ will reflect light, and after a further slight rotation of the third grating 12″ will reflect light.

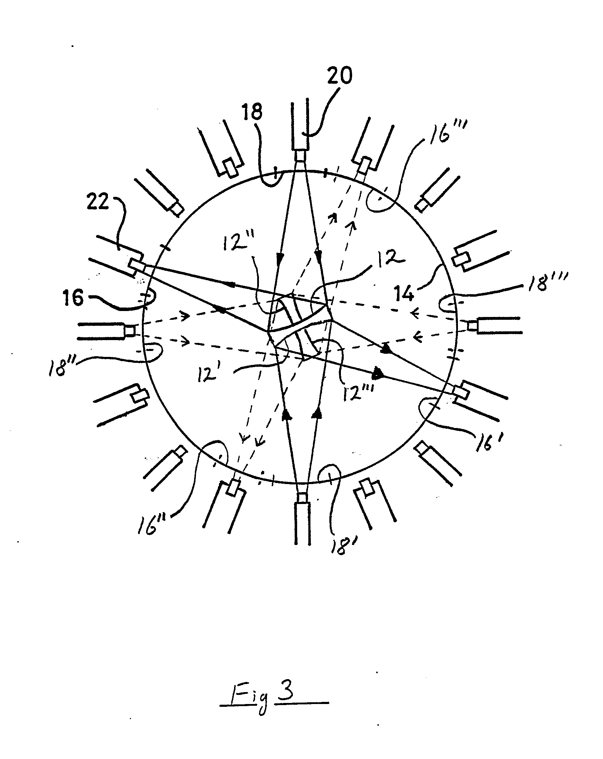

In Figure 3, there are also two axially spaced rows of inputs 20 and outputs 22. Each row is associated with a respective block providing two gratings. The gratings associated with different rows of inputs 20 and outputs 22 do not need to have the same angular positioning, and in the embodiment of Figure 3 the gratings 12, 12′ associated with one row are at 90° to the gratings 12″, 12‴ associated with the other row.

Each grating 12, 12′, 12″, 12‴ is associated with a respective inlet window 18, 18′, 18″, 18‴ and a respective outlet window 16, 16′, 16″, 16‴. In this embodiment all the gratings receive and reflect light at the angular positioning shown in Figure 3. The windows and light paths associated with the nearer gratings 12, 12′ are shown in full lines and the windows and light paths associated with the further gratings 12″, 12‴ are shown in broken lines.

As can be seen in Figure 5, in this embodiment separate drums 14, 14′ are provided associated

with the separate rows of inputs and outputs. Again, the inputs and outputs are not shown in Figure 5 for clarity. A flange 14″ on the upper drum 14 prevents light from passing through the gap between the drums 14, 14′. In this embodiment, if suitable mountings are provided the upper drum 14 and gratings 12, 12′ may be rotated independently and, if desired, at a different speed from the lower drum 14′ and the gratings 12″, 12‴.

As will be apparent to those skilled in the art, further rows of inputs and outputs may be provided, and further gratings per row. The features illustrated in the figures may be combined differently to create further embodiments. The inputs and outputs of different rows need not be aligned, and different rows may have different numbers of inputs and outputs.

## Claims

1. An optical spectrum multiplexer comprising an input slit, an output slit and a diffraction grating, characterised in that
there are two or more input slits;
there are two or more output slits, the input and output slits being arranged around a circular path;
the diffraction grating is concave and is mounted for rotation about an axis passing through the centre of the circular path around which the input and output slits are disposed; and
there is means operative at any instant for restricting light incident on any portion of the grating through one of the input slits to one of the output slits.

2. A multiplexer according to claim 1, comprising a plurality of circular paths of input slits and output slits, and a plurality of grating portions axially positioned to be associated with respective circular paths.

3. A multiplexer according to claim 1 or claim 2, comprising a plurality of grating portions associated with a common circular path of input and output slits.

4. A multiplexer according to claim 2 or claim 3 in which at least some of the grating portions are provided by a common grating.

5. A multiplexer according to claim 2, claim 3 or claim 4, in which a plurality of gratings provide the grating portions.

6. A multiplexer according to any one of the preceding claims, wherein the number of output slits corresponds to the number of input slits.

7. A multiplexer according to any one of the preceding claims, wherein each input comprises the exit aperture of a non-monochromatic light emitting means.

8. A multiplexer according to claim 7, wherein each output slit comprises the entry aperture of a light collecting means of a light detecting means.

9. A multiplexer according to any one of the preceding claims, wherein the said light restricting means comprises a windowed cylindrical drum interposed between the slits and the grating and rotatable in timed relationship to the latter.

10. A multiplexer according to claim 9, wherein the grating and the drum have a common mounting so as to be rotatable in synchronism.

_Fig 1_

Fig 2

Fig 3

14

18'

18"

16'

18'

18"

_Fig 4_

14

16

18'

14"

18"

14'

16"

_Fig 5_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-B-2 754 444 (PERKIN-ELMER)<br><br>* column 4, lines 22-26 *<br><br>--- | | G 01 J 3/06<br>G 01 J 3/28 |
| A | US-A-4 245 911 (E.W. STEINBRENNER)<br>* figure 1 *<br><br>--- | | |
| A | DE-U-8 225 640 (RAFI)<br><br>* page 11, lines 4-9 *<br><br>----- | | |

|  | TECHNICAL FIELDS SEARCHED (Int. Cl.4) |
|---|---|
|  | G 01 J 3/00 |

The present search report has been drawn up for all claims

| Place of search | Date of completion of the search | Examiner |
|---|---|---|
| BERLIN | 03-07-1987 | FUCHS R |